# EUROPÄISCHE PATENTSCHRIFT

(11) **EP 2 614 647 B1**
(45) Veröffentlichungstag und Bekanntmachung des Hinweises auf die Patenterteilung: **18.10.2017**
(21) Anmeldenummer: 12700392.9
(22) Anmeldetag: 12.01.2012
(51) Int. Cl.: H04N 19/159, H04N 19/147, H04N 19/46, H04N 19/426

(54) **KOMPRESSION UND DEKOMPRESSION VON REFERENZBILDERN IN EINEM VIDEOKODER**
REFERENCE FRAME COMPRESSION AND DECOMPRESSION IN A VIDEO CODER
COMPRESSION ET DÉCOMPRESSION D'IMAGES DE RÉFÉRENCE DANS UN CODEUR VIDÉO

(30) Priorität: 12.01.2011 EP 11150714
(43) Veröffentlichungstag der Anmeldung: 17.07.2013
(73) Patentinhaber: Siemens Aktiengesellschaft, 80333 München (DE)
(72) Erfinder: AMON, Peter, 81675 München (DE); OERTEL, Norbert, 84032 Landshut (DE); BÄSE, Gero, 81739 München (DE); HUTTER, Andreas, 81673 München (DE); AGTHE, Bernhard, 85622 Feldkirchen (DE); KUTKA, Robert, 82269 Geltendorf (DE)
(86) Internationale Anmeldenummer: PCT/EP2012/050430
(87) Internationale Veröffentlichungsnummer: WO 2012/095487

(56) Entgegenhaltungen:
- EP-A1- 1 853 067
- US-A- 5 933 195
- US-A1- 2008 170 626
- US-A1- 2010 098 169
- US-A1- 2011 249 723
- US-B1- 6 229 852
- US-B1- 6 470 051
- DEMIRCIN M U ET AL: "TE2: Compressed reference frame buffers (CRFB)", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SIT E/,, Nr. JCTVC-B089, 20. Juli 2010 (2010-07-20) , XP030007669, ISSN: 0000-0046 in der Anmeldung erwähnt
- BUDAGAVI M ET AL: "ALF memory compression and IBDI/ALF coding efficiency test results on TMuC-0.1", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SIT E/,, Nr. JCTVC-B090, 17. Juli 2010 (2010-07-17) , XP030007670, ISSN: 0000-0046 in der Anmeldung erwähnt
- LIM C S ET AL: "TE2: Reference frame compression using image coder", 94. MPEG MEETING; 11-10-2010 - 15-10-2010; GUANGZHOU; (MOTION PICTURE EXPERT GROUP OR ISO/IEC JTC1/SC29/WG11),, no. M18096, 28 October 2010 (2010-10-28), XP030046686,
- AOKI H ET AL: "TE2: 1-D DPCM-based memory compression", 94. MPEG MEETING; 11-10-2010 - 15-10-2010; GUANGZHOU; (MOTION PICTURE EXPERT GROUP OR ISO/IEC JTC1/SC29/WG11),, no. M18116, 28 October 2010 (2010-10-28), XP030046706,

## Beschreibung

Die Erfindung betrifft Verfahren und Vorrichtungen zum Bereitstellen eines rekonstruierten Bildes.

In den vergangenen Jahren wurden zu codierende Bildformate, beispielsweise durch Einführung von neuartigen Aufnahmesystemen immer größer. So findet unter anderem derzeit eine Umstellung von einem in den letzten 50 Jahren in Europa verwendeten Fernsehübertragungssystem PAL (Phase Alternation Line Verfahren) mit einer Vollbildgröße von 625 x 576 Bildpunkten zu einem HDTV (High Definition Television) mit 1920 x 1080 Bildpunkten bzw. 1280 x 720 Bildpunkten statt. Es ist zu erwarten, dass in Zukunft noch größere Bildformate in neuartigen Fernsehsystemen eingeführt werden.

HDTV und zukünftige Systeme verwenden digitale Kompressionsverfahren, um eine Folge von Videobildern derart zu komprimieren, dass diese beispielsweise über das Internet oder über Mobilfunkkanäle übertragbar sind. Durch die Vergrößerung der Bildformate nehmen jedoch eine zur Komprimierung der Folge von Videodaten benötigte Rechenleistung und der hierbei benötigte Speicherbedarf erheblich zu. Eine Folge hiervon ist, dass auch ein Datentransfer zwischen Speicher und Recheneinheiten, die die Kompressionsverfahren realisieren, erheblich ansteigt.

Daher arbeiten Arbeitsgruppen, wie beispielsweise die Joint Colloborative Team on Video Coding (JCT-VC), eine gemeinsame Arbeitsgruppe der ITU und der ISO/IEC (ITU - International Telecommunication Union, ISO - International Standardization Organisation, IEC - International Electrotechnical Commission) nicht nur an einer Verbesserung der Kompressionsrate, sondern auch an standardisierten Methoden, um Videobilder in Referenzbildspeichern der jeweiligen Codecs effizient ablegen und in ressourcenschonender Weise zugreifen zu können.

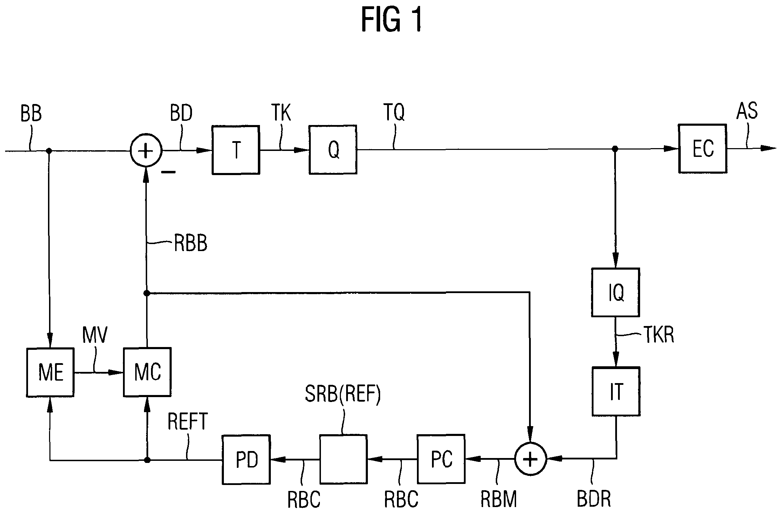

Figur 1 zeigt eine bekannte Vorrichtung zur Komprimierung einer Sequenz von Bildern mit einem Referenzbildspeicher SRB. Hierbei werden Bilder bspw. mittels einer prädiktiven Kodierung, auch als INTER-Kodiermodus bekannt, kodiert. Eines der Bilder wird in Bildblöcke BB, beispielsweise mit 16 x 16 Bildpunkten, zerlegt und anschließend bildblockweise codiert. Dann wird für einen der Bildblöcke ein Referenzbildblock RBB in einem Referenzbild REF gesucht, der eine gute Grundlage für eine Schätzung eines Bildinhaltes des Bildblocks gewährleistet. Hierzu wird der Bildblock einer Bewegungsschätzeinheit ME übergeben, die anhand eines Referenzteilbildes REFT, das Teile des Referenzbildes REF nach einer Bilddekompression durch eine Bilddekompressionseinheit PC umfasst, den Referenzbildblock aus dem Referenzteilbild auswählt und den ausgewählten Referenzbildblock mittels eines Bewegungsvektors MV an eine Bewegungskompensationseinheit MC signalisiert. Die Bewegungskompensationseinheit stellt den Referenzbildblock auf Basis des Referenzbildes und des Bewegungsvektors bereit.

In einem nächsten Schritt wird ein Differenzbildblock BD durch Subtraktion des Referenzbildblocks RBB von dem Bildblock BB erzeugt. Der Differenzbildblock wird im Folgenden einer Transformation in einer Transformationseinheit T, beispielsweise nach einem diskreten Cosinustransformationsverfahren, unterzogen. Am Ausgang der Transformationseinheit stehen Transformationskoeffizienten TK zur Verfügung, die nachfolgend zur Quantisierung einer Quantisierungseinheit Q zugeführt werden. Am Ausgang der Quantisierungseinheit stehen quantisierte Transformationskoeffizienten TQ zur Verfügung, die durch eine Entropiekodierung, durchgeführt durch eine Entropie-Codiereinheit EC, in ein Ausgangssignal AS überführt werden.

In einer Rückkoppelschleife werden die quantisierten Transformationskoeffizienten TQ mittels einer inversen Quantisierung durch eine inverse Quantisierungseinheit IQ in rekonstruierte Transformationskoeffizienten TKR überführt. Diese rekonstruierten Transformationskoeffizienten TKR werden durch inverse Transformation einer inversen Transformationseinheit IT in einen rekonstruierten Differenzbildblock BDR transformiert. In einem weiteren Schritt wird ein rekonstruierter Bildblock RBM durch Addition des rekonstruierten Differenzbildblocks BDR und des Referenzbildblocks RBB generiert.

In älteren Codierverfahren wird der rekonstruierte Bildblock direkt in den Referenzbildspeicher geschrieben. In aktuell in der Standardisierung befindlichen Verfahren wird zur Reduktion eines Datenvolumens der rekonstruierte Bildblock zunächst noch einer Bildkompression durch eine Bildkompressionseinheit PC unterzogen, die ein Datenvolumen des rekonstruierten Bildblocks deutlich reduziert. Ein durch die Bildkompressionseinheit PC entstandener komprimierter rekonstruierter Bildblock RBC wird nachfolgend in dem Referenzbildspeicher abgelegt. Um der Bewegungsschätzeinheit und der Bewegungskompensationseinheit einen Zugriff auf die benötigten Bilddaten zu gewähren, wird bei Anforderung eines Referenzbildes REF bzw. eines spezifischen Bildausschnitts des Referenzbildes zunächst der jeweilige komprimierte rekonstruierte Bildblock aus dem Referenzbildspeicher SRB ausgelesen und mittels einer Bilddekompression durch eine Bilddekompressionseinheit PD in einen Referenzteilbild REFT überführt.

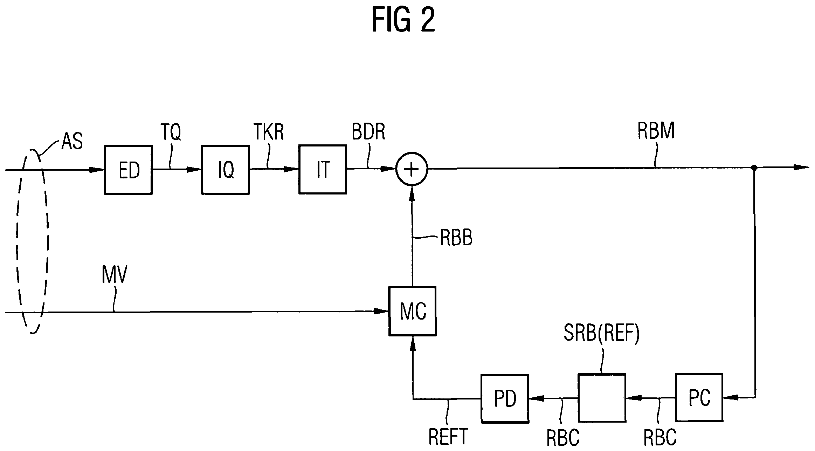

Figur 2 zeigt einen zum in Figur 1 gezeigten Encoder korrespondierenden Decoder. Hierbei wird das Ausgangssignal AS mittels einer Entropiedecodiereinheit ED in quantisierte Transformationskoeffizienten TQ decodiert. Ferner werden die quantisierten Transformationskoeffizienten mittels der inversen Transformationseinheit IQ in rekonstruierte Transformationskoeffizienten TKR invers quantisiert. Hieran schließt sich eine inverse Transformation der rekonstruierten Transformationskoeffizienten TKR in einen rekonstruierten Differenzbildblock BDR durch die inverse Informationseinheit IT an.

Neben dem Ausgangssignal wird dem Decoder unter anderem auch der jeweilige Bewegungsvektor MV übermittelt. Hieraus kann der Decoder unter Verwendung des Referenzteilbildes REFT durch die Bewegungs-Kompensationseinheit MC den Referenzbildblock RBB ermitteln, der durch Addition mit dem rekonstruierten Differenzbildblock in den rekonstruierten Bildblock RBM überführt wird.

Der rekonstruierte Bildblock RBM kann beispielsweise an einem Display wiedergegeben werden. Der rekonstruierte Bildblock RBM wird nachfolgend mittels einer Kompression durch die Bildkompressionseinheit PC in den komprimierten rekonstruierten Bildblock RBC überführt, der anschließend in dem Referenzbildspeicher SRB abgelegt wird. Die in dem Referenzbildspeicher abgelegten komprimierten rekonstruierten Bildblöcke können durch die Bilddekompressionseinheit PD in das Referenzteilbild dekomprimiert werden.

Die Druckschrift US 2010/098169 A1 offenbart ein Videocodierverfahren mit einer Bewegungsschätzung unter Verwendung von Referenzbildern, welche komprimiert gespeichert werden.

Dokument [1] beschreibt ein verlustloses Bildkompressionsverfahren/Bilddekompressionsverfahren, bei dem nach einer Floating Point DCT-Transformation (DCT - Discrete Cosinus Transformation) und einem Scanning von, nach der Transformation zweidimensional angeordnete, Koeffizienten in einer eindimensionalen Darstellung eine Bitebenencodierung durchgeführt wird.

In einem Verfahren gemäß Dokument [2] wird eine Speicherzugriffsbandbreitenreduktiontechnik vorgeschlagen. Hierbei werden neben einer Transformation und einer Quantisierung auch eine DC Prädiktion und eine Entropiecodierung für die Bildkompressionseinheit PC bzw. inversen Schritt dazu für die Bilddekompressionseinheit PD vorgeschlagen.

In einem weiteren Dokument [3] werden Testergebnisse bei einer Kompression bzw. Dekompression von Bilddaten vor und nach einem Deblockingbildspeicher vorgestellt.

Schließlich wird in einem Dokument [4] eine eindimensionale DPCM basierte Bildspeicherkompressionsmethode (DPCM - Differential Pulscode Modulation) vorgestellt.

Zumindest die in den Dokumenten [1] und [4] vorgeschlagenen Kompressionsmethoden sind verlustfrei.

Es besteht die Aufgabe Verfahren und Vorrichtungen anzugeben, mit denen eine resourceneffiziente Implementierung zur Kompression/ Dekompression von rekonstruierten Bildblöcken für eine Bildencodiervorrichtung und/oder Bilddecodiervorrichtung ermöglicht wird.

Die Aufgabe wird durch die unabhängigen Ansprüche gelöst. Weiterbildungen der Erfindung sind den abhängigen Ansprüchen zu entnehmen.

Die Erfindung betrifft ein Verfahren zum Speichern zumindest eines Bildbereichs eines rekonstruierten Bildes, wobei ein Bildbereich einen Bildblock darstellt und das rekonstruierte Bild durch eine Bildencodiervorrichtung oder durch eine Bilddecodiervorrichtung generiert wird, und zum Bereitstellen des zumindest einen Bildbereichs als Referenzbild für die Bildencodiervorrichtung oder Bilddecodiervorrichtung, mit folgenden Schritten:
a) Komprimieren des zumindest einen Bildbereichs in komprimierte Daten auf Basis einer ersten Vorschrift;
b) Speichern der komprimierten Daten;
c) Dekomprimieren der komprimierten Daten (KDAT) in den zumindest einen Bildbereich (BR) auf Basis einer zweiten Vorschrift (V2);
d) wobei die erste Vorschrift (V1) auf Basis einer dritten Vorschrift (V3), wobei die dritte Vorschrift (V3) einen Kodiermodus (M1) der Bildencodiervorrichtung (ENC) definiert, gebildet wird,
e) wobei die zweite Vorschrift (V2) dadurch gebildet wird, dass die zweite Vorschrift (V2) als eine zur dritten Vorschrift (V3) inverse dritte Vorschrift (V3I) gewählt wird, welche die Dekodierung eines mit der dritten Vorschrift (V3) kodierten Bildblocks definiert.

Erfindungsgemäß wird die erste Vorschrift auf Basis der dritten Vorschrift durch den folgenden Schritt erzeugt:
- Falls die dritte Vorschrift für den Bildblock einen INTER-Kodiermodus mit zugehörigen Bewegungsvektoren verwendet, dann wird die erste Vorschrift zum Komprimieren dieses Bildblocks im rekonstruierten Bild in der Bildkompressionseinheit identisch zu der dritten Vorschrift gewählt, wobei ein Bewegungsvektor für den INTER-Kodiermodus sowohl der dritten Vorschrift als auch der ersten Vorschrift identisch gewählt wird.

Die Erfindung ermöglicht ein speichereffizientes Ablegen von Referenzbildern, die im Rahmen einer Codierung durch die Bildencodiervorrichtung bzw. einer Decodierung durch die Bilddecodiervorrichtung benötigt werden. Von Vorteil ist, dass das Komprimieren der rekonstruierten Bilder, d.h. der Referenzbilder, auf Basis eines der Kodiermodi der Bildencodiervorrichtung erfolgt. Hierdurch kann unter anderem eine implizite Vorschrift zur Erstellung der ersten bzw. zweiten Vorschrift zum Komprimieren bzw. Dekomprimieren erreicht werden. Ferner folgt eine Kodierentscheidung der Bildencodiervorrichtung zur Kodierung eines Bildblocks oftmals einer Rate-Distortion Optimierung, die eine Bildqualität bei minimalem Speicheraufwand optimiert. Dieser optimale Kodiermodus bildet dann die Basis zur Kompression des Bildbereichs des rekonstruierten Bildes, wodurch auch eine hohe Kompressionsrate erzielbar ist. Zudem unterstützen eine Vielzahl von auf dem Markt verfügbare Geräte eine Hardwareunterstützung zur Verarbeitung von zumindest Teilschritten, die in der Bildencodiervorrichtung bzw. Bilddecodiervorrichtung durchgeführt werden. Somit kann auch die Kompression bzw. Dekompression des Referenzbildes diese Hardwareunterstützung einsetzen.

In heute standardisierten Bildencodiervorrichtungen und Bilddecodiervorrichtungen werden oftmals vor Speicherung der rekonstruierten Bilder diese einem Deblocking-Filter und/oder weiteren Filteroperationen, wie bspw. einem Wiener-Filter, unterzogen. In einer Weiterbildung werden bei Verwendung der Erfindung diese Schritte erst nach der Dekompression durchgeführt. Hierdurch wird eine Nutzung von für den jeweiligen Bildbereich des rekonstruierten Bildes zur Verfügung stehenden Kodiermodi, transformierte oder quantisierte Koeffizienten durch die Kompression zur Erzeilung einer verbesserten Kompressionsrate ermöglicht.

Vorzugsweise werden die komprimierten Daten zusammen mit einem Index in dem Referenzbildspeicher abgelegt werden, wobei der Index eine Kennung zur eindeutigen Identifikation der ersten Vorschrift oder der zweiten Vorschrift umfasst. Hierdurch lassen sich auch Modi zum Komprimieren bzw. Dekomprimieren einsetzen, die nicht implizit bestimmbar sind und gegenüber implizit bestimmbaren Modi eine bessere Kompressionsrate erzielen.

In einer Weiterbildung werden die kodierten Daten gemäß einer Syntax zur Erzeugung eines Ausgangsdatenstroms, der (i) durch die Bildencodiervorrichtung erzeugt und/oder (ii) durch die Bilddecodiervorrichtung empfangen wird, gespeichert. Hierdurch erhält die Bilddecodiervorrichtung Informationen, in welcher Art und Weise die Bildencodiervorrichtung einzelne Bildbereiche des rekonstruierten Bildes, möglicherweise nicht verlustfrei, komprimiert und dekomprimiert hat. Hiermit lässt sich eine Drift zwischen Bildencodiervorrichtung und Bilddecodiervorrichtung vermeiden.

In einer vorteilhaften Weiterbildung werden mehrere Bildbereiche des rekonstruierten Bildes zu einer Bildregion zusammenfasst und als unabhängig dekomprimierbar von anderen Bildregionen desselben rekonstruierten Bildes gespeichert. Hierdurch wird erreicht, dass auf die Bildregionen eines rekonstruierten Bildes unabhängig von anderen Bildregionen desselben rekonstruierten Bildes zugriffen werden kann. Hierdurch wird ein Rechenaufwand zur Dekompression und eine Zugriffszeit auf Bildinhalte einer Bildregion reduziert, da außer der angefragten Bildregion keine Bildinhalte anderer Bildregionen dekomprimiert werden muss.

Vorteilhafterweise werden die jeweiligen Bildbereiche der Bildregion entweder gemäß einer einzigen ersten Vorschrift oder gemäß einer Abfolge von jeweiligen ersten Vorschriften komprimiert. Hierdurch wird ein Signalisierungsaufwand und somit ein Speicheraufwand reduziert, da nicht für jeden Bildbereich eine individuelle erste bzw. zweite Vorschrift in dem Referenzbildspeicher abgelegt werden muss.

In vorteilhafter Weise werden zumindest einige der Bildbereiche der Bildregion durch einen INTRA-Prädiktionsmodus komprimiert, wobei erste Bildpunkte, die zur Rekonstruktion zumindest eines Bildpunkts der Bildregion erforderlich sind und lediglich durch eine andere Bildregion als die Bildregion ermittelbar sind, zusätzlich zu den komprimierten Daten (der Bildregion gespeichert werden. Eine Verwendung des INTRA-Prädiktionsmodus kann in einfacher Weise durchgeführt werden.

Werden die ersten Bildpunkte gemäß einer vorgebaren Vorschrift komprimiert, insbesondere gemäß einer Delta-Kodierung, und gespeichert, so wird ein Speicherungplatz zum Speichern des Bildbereichs komprimiert mittels des INTRA-Prädiktionmodus weiter reduziert.

In einer vorteilhaften Weiterbildung wird zumindest einer der Bildbereiche der Bildregion anstelle durch den INTRA-Prädiktionsmodus durch einen INTRA-Kodiermodus komprimiert. Hier lassen sich auch Bildbereiche, die schlecht prädizierbar sind, bspw. aufgrund von Bildrauschen oder starker Bewegung, effizient komprimieren.

Vorteilhafterweise wird aus einer Anzahl an Modi, gebildet (i) durch zumindest zwei unterschiedliche INTRA-Prädiktionsmodi oder (ii) durch zumindest einen INTRA-Prädiktionsmodus und dem INTRA-Kodiermodus, derjenige Modus ausgewählt, der für den zu komprimierenden Bildbereich einen geringsten Speicherplatzbedarf hat. Durch diese Optimierung wird erreicht, dass das rekonstruierte Bild in einer guten Qualität dekomprimierbar ist und gleichzeitig mit einer hohen Kompressionsrate komprimierbar ist.

Wird vorzugsweise bei einer INTRA-Prädiktion ein zur INTRA-Prädiktion verwendeter Quantisierungsparameter gespeichert, so kann eine hochqualitative Dekompression gewährleistet werden.

In einer Weiterbildung werden zumindest zwei rekonstruierte Bilder gespeichert, wobei ein erstes der zumindest zwei rekonstruierten Bilder mittels eines INTRA-Prädiktionsmodus und/oder INTRA-Kodiermodus und ein zeitlich dem ersten rekonstruierten Bild nachfolgendes zweites der zumindest zwei rekonstruierten Bilder mittels eines INTER-Kodiermodus, dessen Bewegungsvektoren auf das erste rekonstruierte Bild verweisen, komprimiert werden. Hierdurch kann gegenüber der reinen INTRA-Prädiktion eine Steigerung der Kompressionsrate erzielt werden.

Vorzugsweise wird die erste Vorschrift auf Basis der dritten Vorschrift durch eine der folgenden Schritte erzeugt:
- Falls die dritte Vorschrift einen INTRA-Kodiermodus beschreibt, so wird die erste Vorschrift durch den derselben INTRA-Kodiermodus gebildet;
- Falls die dritte Vorschrift einen Kodiermodus beschreibt, bei dem (i) ein zu kodierender Makroblock / Bildblock durch ein "skip" Signal, d.h. ohne Bewegungsvektor, und (ii) das Referenzbild des zu kodierenden Makro-/Bildblocks mittels eines INTRA-Kodiermodus kodiert sind, dann wird für die erste Vorschrift derjenige INTRA-Kodiermodus gewählt, der für die Kodierung des Referenzbilds verwendet wird;
- Falls die dritte Vorschrift für den Bildblock /Makroblock einen INTER-Kodiermodus mit zugehörigen Bewegungsvektoren verwendet, dann wird die erste Vorschrift identisch zu der dritten Vorschrift gewählt, wobei Bewegungsvektor für den INTER-Kodiermodus sowohl der dritten Vorschrift als auch der ersten Vorschrift identisch gewählt wird.

Durch Anwendung einer dieser Vorschriften kann eine implizite Signalisierung der zur Kompression bzw. Dekompression verwendeten ersten bzw. zweiten Vorschrift erreicht werden. Zudem lassen sich bereits optimierte Kodiermodi zur Kompression wieder verwenden, wodurch Rechenaufwand zur Ermittlung einer optimalen ersten Vorschrift vermieden werden kann.

In einer vorteilhaften Weiterbildung wird zum Synchronisieren des Verfahrens in der Bildencodiervorrichtung und in der Bilddekodiervorrichtung eine Signalisierung zumindest einer der folgenden Parameter zwischen Bildencodiervorrichtung und Bilddekodiervorrichtung durchgeführt:
- der Index für den Bildbereich des rekonstruierten Bildes oder für eine Bildregion des rekonstruierten Bildes, wobei der Index eine Kennung zur eindeutigen Identifikation der ersten Vorschrift oder der zweiten Vorschrift umfasst;
- ein Quantisierungsfaktor, der bei einem INTRA-Prädiktionsmodus oder INTRA-Kodiermodus zur Komprimierung zumindest einer der Bildbereiche eingesetzt wird.

Hierdurch kann eine Kompressionsrate erhöht werden, da die Kompression nicht nur auf implizit signalisierbare erste Vorschriften durchgeführt werden muss. Somit steht eine größere Auswahl an dritten Vorschriften zur Auswahl, die durch die erste Vorschrift berücksichtigt werden können.

Neben den genannten Vorschriften können die erste und die zweite Vorschrift gemäß zumindest einer der folgenden Vorgehensweisen bestimmt werden:
a) Einsatz von verschiedenen Kompressionsverfahren ausgeführt durch die Bildkompressionseinheit bzw. Bilddekompressionseinheit:
   - explizite Signalisierung des verwendeten Kompressionsverfahrens im Ausgangssignal;
   - Zuordnung von Kompressionsverfahren jeweils zu Profilen und Profilen/Level, die zur Kodierung eines Bildblocks von der Bildencodiervorrichtung bzw. Bildbecodiervorrichtung verwendet werden;
b) Parameter, die das Kompressionsverfahren beschreiben:
   - Zuordnung von Parametersets zu Profil / Levelkombinationen
   - Signalisierung / Übertragung von Parametern inband oder als separater Parameterset;
   - Parameterreduktion auf Basis von verfügbaren Daten, z.B. vorhergehendes Bild, aktuell verwendeter Quantisierungsparameter;
c) Möglichkeiten zur Reduktion der Parameter auf Basis von verfügbaren Daten:
   - mitgeführte Statistik
   - für einen Bildteil, der INTRA kodiert ist:
      ∘) Übernahme des aktuellen Kodiermodus, oder
      ∘) Änderung des Modus in eine jeweiligen oder sehr ähnlichen INTRA Kompressionsmodus;
      ∘) Herleiten der Prädiktionsrichtung (zu verwenden durch anderen Modus der Kompression)
   - Herleiten der Parameter durch einen anderen Kodierschritt, insbesondere von der Quantisierung (Quantisierungsschrittweite oder Quantisierungsparameter), Transformationsoperationen und Filteroperationen.

Die Herleitung kann eine Konvertierung des Zahlenraums, spezielles Runden von berechneten Werten, aber auch Formeln zum direkten Berechnen der Parameter, umfassen.

Falls eine Parameterherleitung nicht auf bereits auf Decoderseite verfügbaren Daten basiert, dann ist Folgendes möglich:
- Ermittlung von Statistiken des zu komprimierenden Bildes
- Verwendung anderer Seiteninformation, z.B. Sensorinformationen
- Multipath-Encodierung (Mehr-Pfad Encodierung) - Optimierung der Parameter durch Berücksichtigung von mehreren Bildern oder einer vollständigen Sequenz (auch qualifiziert für Auswahl einer Kompressionsmethode);
- Erkennen von Szenenschnitten, bspw. ein Bild muss nicht komprimiert werden, da es nicht als Referenzbild eingesetzt wird;
- Verwendung von speziell verfügbaren Parametern für longterm-reference Bilder (=Langzeit-Referenzbilber), bspw. eine sehr hohe Qualität, könnte verlustlos sein.

Bedingungen:
- Datenrateneinschränkungen des Übertragungskanals lassen eine Verwendung von gröberen Parametern zu;
- Qualitätsgrenzen auf Bildebene erfordern statistisch basierte Ansätze, weil die Verarbeitung blockweise durchgeführt wird;
- Qualitätsgrenzen auf Blockebene könnten sich direkt auf die Qualität eines zu komprimierenden Blocks beziehen;
- minimale Qualität zum Erreichen, maximale Anzahl an Daten generiert und interner Datenbusdurchsatz als potentielle Grenze für Parameterherleitung und Prozessauswahl.

Die Verwendung der Kompression für Referenzinformation resultiert in verschiedenen Speicher-Footprints (=Speichermuster oder Speicheranforderungen) für jedes Referenzbild. Dies ergibt sich im Besonderen durch die Verwendung von verschiedenen Kompressionsprozessen und durch die Herleitung der Parameter für den Kompressionsprozess in einer dynamischen Art und Weise.
- Speicherorganisation (beispielsweise Aufteilung von Bilddaten in Teilbereiche = einer bestimmten Größe) ermittelt Speicherausnutzung und hierdurch die Anzahl an Referenzbilder;
- Zuordnung einer Speicherverwaltung in Bezug auf Parameter zu Profil/Level-Kombinationen, z.B. Teilbereichsgröße.

Der Vorteil dieser Vorgehensweisen: Signalisierung und/oder Herleitung der Parameter wird zur Steuerung eines gleichen Verhaltens des Komprimierungsprozesses von Referenzinformation in Encoder und Decoder optimiert für nachfolgende Prozessschritte, Speichergrößen und internen Datenbusdurchsatz sowie für Bildqualitätsanforderungen benötigt.

Die Erfindung betrifft auch eine Vorrichtung zum Speichern zumindest eines Bildbereichs eines rekonstruierten Bildes, wobei ein Bildbereich einen Bildblock darstellt und das rekonstruierte Bild durch eine Bildencodiervorrichtung oder durch eine Bilddecodiervorrichtung generiert ist, und zum Bereitstellen des zumindest einen Bildbereichs als Referenzbild für die Bildencodiervorrichtung oder Bilddecodiervorrichtung, mit folgenden Einheiten:
a) Bildkompressionseinheit zum Komprimieren des zumindest einen Bildbereichs in komprimierte Daten auf Basis einer ersten Vorschrift;
b) Speichereinheit zum Ablegen der komprimierten Daten zusammen;
c) Bilddekompressionseinheit zum Dekomprimieren der komprimierten Daten in den zumindest einen Bildbereich auf Basis einer zweiten Vorschrift;
d) wobei die erste Vorschrift auf Basis einer dritten Vorschrift, wobei die dritte Vorschrift einen Kodiermodus der Bildencodiervorrichtung definiert, gebildet ist,
e) wobei die zweite Vorschrift dadurch gebildet ist, dass die zweite Vorschrift eine zur dritten Vorschrift inverse dritte Vorschrift ist, welche die Dekodierung eines mit der dritten Vorschrift kodierten Bildblocks definiert,
dadurch gekennzeichnet, dass
die erste Vorschrift auf Basis der dritten Vorschrift durch den folgenden Schritt erzeugt wird:
- Falls die dritte Vorschrift für den Bildblock einen INTER-Kodiermodus mit zugehörigen Bewegungsvektoren verwendet, dann wird die erste Vorschrift zum Komprimieren dieses Bildblocks im rekonstruierten Bild in der Bildkompressionseinheit identisch zu der dritten Vorschrift
   gewählt, wobei ein Bewegungsvektor für den INTER-Kodiermodus sowohl der dritten Vorschrift als auch der ersten Vorschrift identisch gewählt wird.

Die Vorteile der Vorrichtung sind analog zu denen des Verfahrens.

Schließlich ist eine Verwendung des erfindungsgemäßen Verfahrens oder der erfindungsgemäßen Vorrichtung in einer Bildencodiervorrichtung (ENC) und/oder Bilddecodiervorrichtung Teil der Erfindung. Hiermit lassen sich die Erfindung und ihre Weiterbildung in vorteilhafter Weise implementieren und ausführen.

Die Erfindung und ihre Weiterbildungen sind anhand von Zeichnungen näher erläutert.

Im Einzelnen zeigen:
- Figur 1: ein aus dem Stand der Technik bekannter Encoder zum Komprimieren von Bilddaten;
- Figur 2: ein aus dem Stand der Technik bekannter Decoder zum Dekomprimieren von komprimierten Bilddaten;
- Figur 3: erstes Ausführungsbeispiel für eine Bildcodiervorrichtung;
- Figur 4: erstes Ausführungsbeispiel für eine Bilddecodiervorrichtung;
- Figur 5a: und 5b zwei INTRA-Prädiktionsmodi gemäß einem Standard H.264/AVC;
- Figur 6: komprimierte und nicht-komprimierte Bildpunkte zum Ablegen in einem Referenzbildspeicher;
- Figur 7: weiteres Ausführungsbeispiel mit zwei Referenzbildern;

In den Figuren sind Elemente mit gleicher Funktion und Wirkungsweise mit denselben Bezugszeichen versehen.

Die Figuren 1 und 2 zeigen einen Encoder und Decoder zur Bildkodierung /-decodierung gemäß dem Stand der Technik. Die Figuren 1 und 2 wurden in der Einleitung ausführlich erläutert, so dass an dieser Stelle auf die Ausführungen in der Einleitung verwiesen wird.

In Folgenden wird unter zumindest einem Bildbereich BR eines rekonstruierten Bildes RBD beispielweise ein rekonstruierter Bildblock RBC verstanden. Ferner wird unter zumindest einem Bildbereich eines Referenzbildes beispielsweise ein Referenzbildblock verstanden. Zudem wird der Referenzbildspeicher auch als Speichereinheit SRB bezeichnet.

Im Allgemeinen verwenden Encoder und Decoder den Referenzbildspeicher um verschiedene prädiktive Kodiermodi zu ermöglichen. Der in den Figuren 1 und 2 vorgestellte Kodiermodus ist ein INTER-Kodiermodus, bei dem rekonstruierte Bildinhalte eines zeitlich zuvor kodierten und decodierten bzw. rekonstruierten Bildes zur Prädiktion eines aktuell zu kodierenden bzw. zu dekodierenden Bildes verwendet wird. Im Stand der Technik ist eine Vielzahl von prädiktiven Kodiermodi bzw. korrespondierende Dekodiermodi beschrieben, so dass hierauf nicht weiter eingegangen wird.

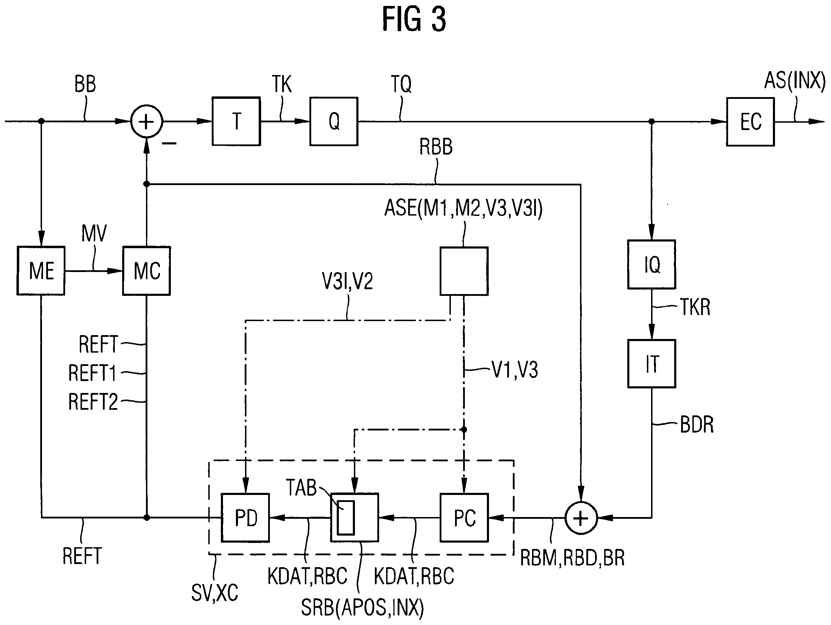

Figur 3 zeigt schematisch eine Bildencodiervorrichtung ENC, im Folgenden als Encoder bezeichnet, der aus Bildern mit Bildblöcken BB das Ausgangssignal AS erzeugt. Die Funktionsweise ist ähnlich zu einer Funktionsweise der Vorrichtung gemäß Figur 1. Hier werden als rekonstruierter Bildblock RBM das Synonym Bildbereich BR des rekonstruierten Bildes RBD, wobei das rekonstruierte Bild alle zu dem Bild zugehörigen rekonstruierten Bildblöcke umfasst, und als komprimierter rekonstruierter Bildblock RBC das Synonym komprimierte Daten KDAT verwendet.

Eine Auswahleinheit ASE wählt aus einer Mehrzahl an Kodiermodi M1, M2 denjenigen aus, der bei einer vorgebbaren Bildqualität einen Speicherplatzbedarf zur Speicherung des Ausgangssignals minimiert bzw. bei einem vorgebbaren Speicherplatzbedarf zur Speicherung des nach Kodierung jeweiligen Bildblocks die Bildqualität des zum Bildblock korrespondierenden rekonstruierten Bildblocks maximiert. Jeder der Kodiermodi M1, M2 repräsentiert jeweils eine von möglichen dritten Vorschriften V3, die die Kodierung des Bildblocks beschreibt. Analog dazu gibt es für jeden der Kodiermodi M1, M2 jeweils eine zu der dritten Vorschrift V3 inverse dritte Vorschrift V3I, die die Dekodierung eines kodierten Bildblocks definiert.

Beispiel für die dritte Vorschrift V3 gemäß Figur 1:
- wähle Referenzbildblock RBB aus dem Referenzteilbild REFT aus
- erzeuge Differenzbildblock BD durch Subtraktion des Referenzbildblocks von dem Bildblock BB des Bildes;
- erzeuge Transformationskoeffizienten TK aus Differenzbildblock BD durch Cosinus-Transformation;
- erzeuge quantisierte Transformationskoeffizienten TQ aus Transformationskoeffizienten TH durch Quantisierung;

Beispiel für eine zur dritten Vorschrift inversen dritten Vorschrift V3I gemäß Figur 1 oder 2:
- erzeuge rekonstruierte Transformationskoeffizienten TKR durch inverse Quantisierung aus quantisierten Transformationskoeffizienten TQ;
- erzeuge rekonstruierten Differenzbildblock BDR durch inverse Transformation aus rekonstruierte Transformationskoeffizienten TKR
- erzeuge rekonstruierten Bildblock RBM durch Addition des Referenzbildblocks RBB und des rekonstruierten Differenzbildblocks BDR

Wie in Figur 3 dargestellt wird die mit dem ausgewählten Kodiermodus verknüpfte dritte Vorschrift V3 der Bildkompressionseinheit PC als erste Vorschrift übergeben. Die Bildkompressionseinheit komprimiert den rekonstruierten Bildblock RBM gemäß dieser ersten Vorschrift, die entweder mit der dritten Vorschrift identisch ist, oder von dieser abgeleitet wird. Beispiele hierfür sind:
- Falls die dritte Vorschrift einen INTRA-Kodiermodus beschreibt, so kann derselbe INTRA-Kodiermodus für die erste Vorschrift verwendet werden.
- Falls die dritte Vorschrift einen Kodiermodus beschreibt, bei dem (i) ein zu kodierender Makroblock / Bildblock durch ein "skip" Signal und ohne Bewegungsvektor und (ii) das Referenzbild mittels eines INTRA-Kodiermodus kodiert wurden, dann wird als erste Vorschrift ein Kodiermodus bereitgestellt, bei dem der zu kodierende Makroblock / Bildblock mittels des INTRA-Kodiermodus, der für die Kodierung des Referenzbilds eingesetzt wurde, verwendet werden;

- Falls die dritte Vorschrift für den Bildblock /Makroblock einen INTER-Kodiermodus mit zugehörigen Bewegungsvektoren verwendet, so kann zur Kompression des rekonstruierten Bildblocks / Makroblocks als erste Vorschrift die dritte Vorschrift übernommen werden, d.h. die Bildkompressionseinheit verwendet zur Kompression des rekonstruierten Bildblocks auch den INTER-Kodiermodus gemäß der dritten Vorschrift und den identischen Bewegungsvektor.

Durch die Kompression des rekonstruierten Bildblocks RBM werden die komprimierten Daten KDAT erzeugt. Die komprimierten Daten werden mit einer Positionsangabe APOS, die eine Position des rekonstruierten Bildblocks in dem Referenzbild bzw. in dem die rekonstruierten Bildblöcke beschreibenden rekonstruierten Bild RBD wiedergibt, abgelegt. Hierdurch ist ein Auffinden von kodierten Einheiten, wie des rekonstruierten Bildblocks möglich. Um einen Zugriff auf bestimmte Bildbereiche im Referenzbild zu ermöglichen wird in dem Referenzbildspeicher eine Tabelle TAB angelegt, die anzeigt, an welcher Speicherposition die zu dem rekonstruierten Bildblock bzw. zu einem Bildbereich im rekonstruierten Bild dazugehörenden komprimierten Daten zu finden sind. Falls die komprimierten Daten eine eindeutige Dekomprimierung durch die Dekomprimierungseinheit nicht ermöglichen, so kann den komprimierten Daten ein Index INX angefügt und im Referenzbildspeicher abgelegt werden, wobei der Index INX eine Kennung zur eindeutigen Identifikation der ersten Vorschrift und/oder der zweiten Vorschrift umfasst. Somit kann die Dekomprimierungseinheit anhand des Index INX die zweite Vorschrift V2 ermitteln und aus den komprimierten Daten KDAT den Referenzbildteil REFT ermitteln. Alternativ kann der Index in der Tabelle TAB abgelegt sein.

Die Bildkompressionseinheit PC, die Bilddekompressionseinheit PD und der Referenzbildspeicher SRB sind als Kompressionsmodul XC, auch als Vorrichtung SV bezeichnet, zusammengefasst.

In dem obigen Beispiel konnte eine erste Vorschrift aus der dritten Vorschrift direkt gewonnen werden. Im Falle, dass die Zuordnung der ersten Vorschrift zu der dritten Vorschrift nicht eindeutig ist, kann in dem Ausgangssignal zusätzlich ein Informationsfeld mit dem Index INX eingefügt werden, das die erste Vorschrift explizit signalisiert.

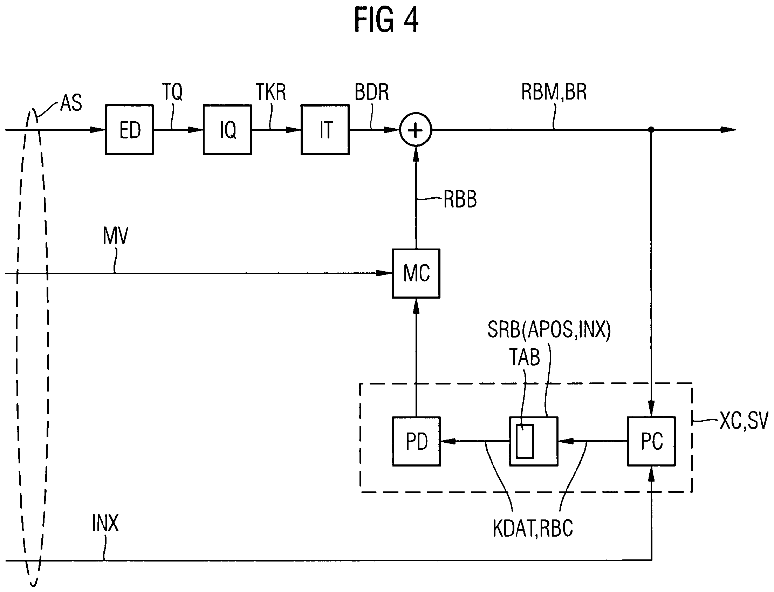

Figur 4 zeigt eine Vorgehensweise zur Anwendung der Erfindung in einer Bilddekompressionseinheit DEC, im Folgenden als Decoder bezeichnet. Ein Ausgangssignal wird analog zur Figur 2 empfangen und verarbeitet. Die Begriffe werden analog zu der Figur 3 verwendet. Das Kompressionsmodul mit seinen Einheiten, Bildkompressionseinheit PC, Bilddekompressionseinheit PD und Referenzbildspeicher SRB arbeitet analog zur Beschreibung in Figur 3. Im Gegensatz zum Encoder nach Figur 3 wird beim Decoder keine Auswahl an Kodiermodi eigenständig getroffen. Vielmehr wird dem Decoder entweder mittel des Informationsfeldes im Ausgangssignal die dritte Vorschrift explizit mitgeteilt, bspw. mittels des Index INX, oder die spezielle Ausgestaltung der dritten Vorschrift ist explizit im Encoder und Decoder vorgegeben oder der Decoder kann die dritte Vorschrift aus dem Ausgangssignal, bspw. anhand eines zur Kodierung eines Bildblocks verwendeten Kodiermodus oder des Bildinhalts, zweifelsfrei ableiten. Aus der dritten Vorschrift lässt sich dann die inverse dritte Vorschrift eindeutig ableiten. Es wäre sehr hilfreich, wenn Encoder und Decoder zur Komprimierung und Dekomprimierung desselben Bildblocks die identische dritte bzw. inverse dritte Vorschrift verwenden. Ansonsten kann es Kodierartefakten kommen.

In einem weiteren Ausführungsbeispiel wird eine INTRA-Prädiktion durch die Bildkommpressionseinheit bzw. Bilddekompressionseinheit eingesetzt. Die INTRA-Prädiktion zeichnet sich dadurch aus, dass ein zu komprimierender Bildblock mittels eines rekonstruierten Bildausschnitts in demselben Bild wie der zu komprimierende Bildblock prädiziert und das sich ergebende Fehlersignal zusammen mit Informationen bzgl. der Prädkition, wie bspw. Prädiktionsmodus oder Bewegungsvektor, kodiert wird. Ein Standard H.264/AVC definiert neun verschiedene INTRA-Prädiktionsmodi, die folgendermaßen lauten:

| Modus der INTRA-Prädiktion | Name (in Englisch und Deutsch) |
|---|---|
| Modus 0: | Vertical (Verikal) |
| Modus 1: | Horizontal |
| Modus 2: | DC-Modus (Gleichanteil-Modus) |
| Modus 3: | Diagonal-Down-Left (Diagonal-Unten-Links) |
| Modus 4: | Diagonal-Down-Right (Diagonal-Unten-Rechts) |
| Modus 5: | Vertical-Right (Vertikal-Rechts) |
| Modus 6: | Horizontal-Down (Horizontal-Unten) |
| Modus 7: | Vertical-Left (Vertikal-Links) |
| Modus 8: | Hprizontal-Up (Horizontal-Oben) |

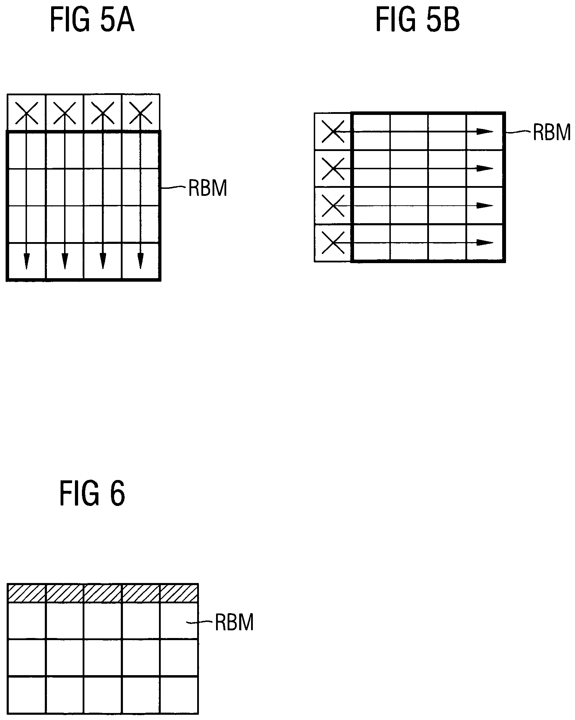

Beispielhaft sind in Figur 5a der Modus 0 und in Figur 5b der Modus 1 abgebildet. Dabei ist im fettumrandeten 4x4 Bildblock der rekonstruierte Bildblock mit 4x4 Bildpunkten zu sehen. Zur Anwendung des Modus 0 werden 4 Bildpunkte des rekonstruierten Bildblocks, siehe Bezugszeichen X, benötigt, der oberhalb des aktuellen rekonstruierten Bildblocks liegt. Analog dazu werden im Modus 1 vier Bildpunkte desjenigen rekonstruierten Bildblocks zur Komprimierung / Dekomprimierung benötigt, der links vom aktuellen rekonstruierten Bildblock liegt.

Zur Kompression des rekonstruierten Bildes wird dieses in Bildregionen unterteilt, wobei die Bildregionen unabhängig von einander komprimiert werden. Hierdurch kann auf Bildinhalte des Referenzbildes derart zugegriffen werden, dass lediglich Bildinhalte einer der Bildregion bearbeitet werden muss. Bei der Vorgehensweise zur Komprimierung gibt es mehrere Varianten.

### Variante 1:

In der ersten Variante werden diejenigen Bildpunkte, die innerhalb der jeweiligen Bildregion nicht rekonstruiert werden können, unkomprimiert in dem Referenzbildspeicher abgelegt. So wird beispielsweise bei ausschließlicher Verwendung des Modus 0 eine ganze Bildpunktzeile, die direkt oberhalb der zu komprimierenden rekonstruierten Bildblöcke liegt, unkomprimiert im Referenzbildspeicher abgelegt. Figur 6 zeigt eine Bildregion mit 3x5 rekonstruierten Bildblöcken. Hierbei repräsentiert die quergestreifte Zeile oberhalb der Bildregion die unkomprimierten Bildpunkte.

Im Allgemeinen werden bei der Variante 1 diejenigen Bildpunkte, die durch andere Regionen des rekonstruierten Bildes generierbar sind unkomprimiert im Referenzbildspeicher abgelegt. Hierdurch kann ein Zugriff auf bestimmte Bildbereiche innerhalb derjenigen Bildregion, die komprimiert im Referenzbildspeicher liegt, erfolgen.

### Variante 2:

In einer Variation zur Variante 1 werden die unkomprimierten Bildpunkte zumindest teilweise komprimiert abgelegt. Hierzu können alle Bildpunkte nach einer vorgebaren Vorschrift in einer Reihe aufgestellt werden und mittels einer Delta-Kodierung oder einer anderen Differenzkodierung komprimiert werden.

### Beispiel:

Bildpunktwerte: 100, 80, 115
Werte nach Differenzkodierung: 100, -20, 15

Hierbei wird der erste Bildpunktwert uncodiert, die nachfolgenden Bildpunktwerte differenziell übertragen.

### Variante 3:

Es kann mehrere INTRA-Prädiktionsmodi, wie bspw. bei H.264/AVC geben. Dann kann pro Bildregion ein spezifischer Modus gewählt werden, der auf alle rekonstruierten Bildblöcke der Bildregion angewandt wird. Alternativ kann auch eine vorgebare Abfolge von INTRA-Prädiktionsmodi zur Kompression einer Abfolge von rekonstruierten Bildblöcken bestimmt sein, wie beispielsweise
Modus 1 -> Modus 0 -> Modus 1 -> Modus 0 -> ...

Hierbei wird ein erster rekonstruierter Bildblock mittels des Modus 1, ein zweiter rekonstruierter Bildblock mittels Modus 0, ein dritter rekonstruierter Bildblock mittels des Modus 1 usw. komprimiert. Die Abfolge der Modi kann im Referenzbildspeicher abgelegt sein, damit eine Individualisierung der Kompression erzielt wird.

### Variante 4:

Neben den INTRA-Prädiktionsmodi kann es auch einen INTRA-Kodiermodus geben, der einen Bildblock ohne Referenzinformation kodiert. Somit wird in dieser Variante der INTRA-Kodiermodus als Modus 9, neben den INTRA-Prädiktionsmodi 0-8, bezeichnet.

In einem ersten Schritt wird bestimmt, welcher der Modi 0 bis 9 unter Berücksichtigung des Speicherbedarfs zur Signalisierung des Kodiermodus und zur Speicherung von nicht durch die Bildregion ermittelbaren Bildpunkten, die für den jeweiligen Modus benötigt werden, den geringsten Speicherplatzbedarf aufweist.

In einem zweiten Schritt werden die komprimierten Daten, die durch Kompression des jeweiligen rekonstruierten Bildblocks auf Basis desjenigen Modus, der den geringsten Speicherplatzbedarf hat, komprimiert und zusammen mit der Information, die zur Dekompression benötigt wird in dem Referenzbildspeicher abgelegt. Zu dieser Information gehört eine Angabe über den Modus und Bildpunkte, die nicht durch die Bildregion rekonstruierbar sind.

Da in dieser Variante auch der INTRA-Kodiermodus berücksichtigt wird, wird der Speicherplatzbedarf zum Speichern der komprimierten Daten minimiert.

### Variante 5:

In einer weiteren Variation kann die Bildkompressionseinheit auch eine Quantisierung der durch die INTRA-Prädiktion und/oder INTRA-Kodiermodus erzeugten Daten durchführen. Falls der Quantisierungsfaktor nicht implizit bestimmbar ist, wird dieser in dem Referenzbildspeicher abgelegt.

### Variante 6:

Eine weitere Variation kann darin bestehen, dass die Bildkompressionseinheit einen Standard-kompatiblen Datenstrom für die Bildregion, beispielsweise in Form von Slices, erzeugt und den Standard-kompatiblen Datenstrom im Referenzbildspeicher ablegt.

Die oben genannten Varianten können zumindest teilweise kombiniert werden. Um eine Drift zwischen Enkoder und Decoder zu vermeiden oder zu minimieren können Informationen, die in den jeweiligen Varianten zusätzlich zu den komprimierten Daten in dem Referenzbildspeicher abgelegt werden, in das Ausgangssignal eingefügt und von dem Enkoder zu dem Decoder übertragen werden.

In einem weiteren Ausführungsbeispiel werden jeweils zwei Referenzbilder im Referenzbildspeicher abgelegt. Ein erstes Referenzbild wird mittels INTRA-Prädiktion komprimiert im Referenzbildspeicher gespeichert. Ein zweites Referenzbild wird komprimiert mittels eines INTER-Kodiermodus in dem Referenzbildspeicher abgelegt. Hierbei wird für jeden rekonstruierten Bildblock ein Referenzbildblock im in dem Referenzbildspeicher abgelegten ersten Referenzbild gesucht. Vorzugsweise wird ein Bewegungsvektor bei dieser Referenzbildblocksuche zu Null gewählt, so dass neben den komprimierten Daten nur eine geringe Anzahl an Informationen im Referenzbildspeicher abzulegen ist. Auch hier müssen die Bildkompressionseinheiten im Encoder und Decoder bzw. die Bilddekompressionseinheiten das jeweilige Referenzbild in derselben Art und Weise komprimieren bzw. dekomprimieren. In einer Ausformung dieser Variante werden die geradzahligen rekonstruierten Bilder mittels INTRA-Prädiktion und die ungeradzahligen rekonstruierten Bilder mittels INTER-Kodiermodus komprimiert im Referenzbildspeicher abgelegt.

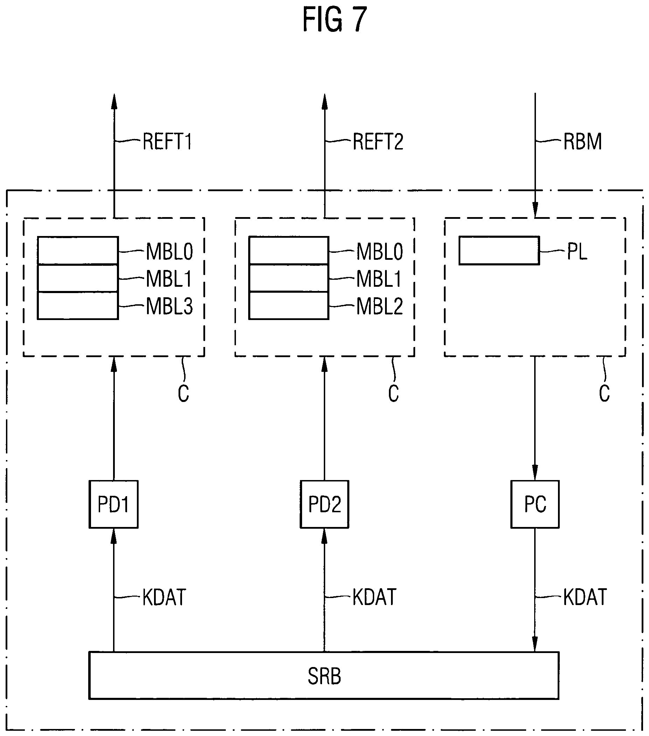

In einem weiteren Ausführungsbeispiel, siehe Figur 7, kann aus zwei Referenzbildern, beide als INTRA-Prädiktion im Referenzbildspeicher abgelegt, jeweils ein Referenzteilbild REFT1, REFT2 ausgewählt werden. In dieser Darstellung zeigen die gestrichelten Bereiche C nicht-komprimierte rekonstruierte Bilddaten in einem Speicher. So werden zumindest einige der Bildpunkte X des rekonstruierten Bildblocks für eine Komprimierung eines nachfolgend zu verarbeitenden rekonstruierten Bildblocks in dem Speicher zwischengespeichert. Um einen einfachen Zugriff auf Teilbereiche der Referenzteilbilder, bspw. für die Bewegungsschätzeinheit ME oder die Bewegungskompensationseinheit MC, zu ermöglichen, werden für jedes der Referenzbilder zumindest Teile als Referenzteilbilder REFT1, REFT2 durch die jeweilige Bilddekompressionseinheit PD1, PD2 in dem Speicher zur Verfügung gestellt. In Figur 7 werden pro Referenzteilbild die Makroblockzeilen ML0, MB1 und MB2 im Speicher abgelegt. Neben der Möglichkeit eine einzige Instanz für die Bilddekompressionseinheit bereitzustellen, kann es vorteilhaft sein auch mehrere Instanzen bereitzuhalten, wie bspw. PD1, PD2. Dies hat den Vorteil, dass die jeweiligen Referenzteilbilder parallel dekomprimiert werden können. Werden bestimmte Bilddaten durch die jeweilige Bilddekompressionseinheit bzw. Bildkompressionseinheit nicht mehr benötigt, so können diese aus dem Speicher gelöscht werden. Dieses Löschen kann in einer Ausgestaltung wie ein gleitendes Fenster (Sliding Window) erfolgen.

Eine Anzahl an Referenzbildern, die im Referenzbildspeicher abgelegt werden soll, kann zwischen Encoder und Decoder signalisiert werden.

### Literaturverzeichnis:

[1] JCTVC-B103: "Reference frame compression using image coder", ISO/IEC Document: JCTVC-B103, 2nd Meeting: Geneva, CH, 21-27 July, 2010, Author: Chong Soon Lim
[2] JCTVC-B089: "Compressed Reference Frame Buffers (CRFB)", ISO/IEC Document: JCTVC-B089, 2nd Meeting: Geneva, CH, 21-28 July, 2010, Author: Mehmet Umut Demircin et al
[3] JCTVC-B090: "ALF memory compression and IBDI/ALF coding efficiency test results in TMuC-0.1", JSO/IEC, Document: JCTVC-B090, Author: Madhukar Budagavi
[4] JCTVC-B057: "DPCM-based memory compression", ISO/IEC Document JCTVC-B057, 2nd Meeting: Geneva, CH, 21-28 July, 2010. Author: Hirofumi Aoki

## Patentansprüche

1. Verfahren zum Speichern zumindest eines Bildbereichs (BR) eines rekonstruierten Bildes (RBD), wobei ein Bildbereich (BR) einen Bildblock darstellt und das rekonstruierte Bild (RBD) durch eine Bildencodiervorrichtung (ENC) oder durch eine Bilddecodiervorrichtung (DEC) generiert wird, und zum Bereitstellen des zumindest einen Bildbereichs (BR) als Referenzbild (REF) für die Bildencodiervorrichtung (ENC) oder Bilddecodiervorrichtung (DEC), mit folgenden Schritten:
a) Komprimieren des zumindest einen Bildbereichs (BR) in komprimierte Daten (KDAT) auf Basis einer ersten Vorschrift (V1) ;
b) Speichern der komprimierten Daten (KDAT);
c) Dekomprimieren der komprimierten Daten (KDAT) in den zumindest einen Bildbereich (BR) auf Basis einer zweiten Vorschrift (V2);
d) wobei die erste Vorschrift (V1) auf Basis einer dritten Vorschrift (V3), wobei die dritte Vorschrift (V3) einen Kodiermodus (M1) der Bildencodiervorrichtung (ENC) definiert, gebildet wird,
e) wobei die zweite Vorschrift (V2) dadurch gebildet wird, dass die zweite Vorschrift (V2) als eine zur dritten Vorschrift (V3) inverse dritte Vorschrift (V3I) gewählt wird, welche die Dekodierung eines mit der dritten Vorschrift (V3) kodierten Bildblocks definiert,
**dadurch gekennzeichnet, dass**
die erste Vorschrift (V1) auf Basis der dritten Vorschrift (V3) durch den folgenden Schritt erzeugt wird:
- Falls die dritte Vorschrift für den Bildblock einen INTER-Kodiermodus mit zugehörigen Bewegungsvektoren verwendet, dann wird die erste Vorschrift zum Komprimieren dieses Bildblocks im rekonstruierten Bild (RBD) in Schritt a) identisch zu der dritten Vorschrift gewählt, wobei ein Bewegungsvektor für den INTER-Kodiermodus sowohl der dritten Vorschrift als auch der ersten Vorschrift identisch gewählt wird.

2. Verfahren nach Anspruch 1, bei dem
die komprimierten Daten (KDAT) zusammen mit einem Index (INX) in dem Referenzbildspeicher abgelegt werden, wobei der Index (INX) eine Kennung zur eindeutigen Identifikation der ersten Vorschrift (V1) oder der zweiten Vorschrift (V2) umfasst.

3. Verfahren nach Anspruch 1, bei dem
die kodierten Daten (KDAT) gemäß einer Syntax zur Erzeugung eines Ausgangsdatenstroms, der (i) durch die Bildencodiervorrichtung (ENC) erzeugt und/oder (ii) durch die Bilddecodiervorrichtung (DEC) empfangen wird, gespeichert werden.

4. Verfahren nach einem der vorangehenden Ansprüche in Kombination mit Anspruch 2, bei dem
zum Synchronisieren des Verfahrens in der Bildencodiervorrichtung (ENC) und in der Bilddekodiervorrichtung (DEC) eine Signalisierung zumindest einer der folgenden Parameter zwischen Bildencodiervorrichtung (ENC) und Bilddekodiervorrichtung (DEC) durchgeführt wird:
- der Index (INX) für den Bildbereich (BR) des rekonstruierten Bildes (RBD) oder für eine Bildregion des rekonstruierten Bildes (RBD);
- ein Quantisierungsfaktor, der bei einem INTRA-Prädiktionsmodus oder INTRA-Kodiermodus zur Komprimierung zumindest einer der Bildbereiche eingesetzt wird.

5. Vorrichtung (SV) zum Speichern zumindest eines Bildbereichs (BR) eines rekonstruierten Bildes (RBD), wobei ein Bildbereich (BR) einen Bildblock darstellt und das rekonstruierte Bild (RBD) durch eine Bildencodiervorrichtung (ENC) oder durch eine Bilddecodiervorrichtung (DEC) generiert ist, und zum Bereitstellen des zumindest einen Bildbereichs (BR) als Referenzbild (REF) für die Bildencodiervorrichtung (ENC) oder Bilddecodiervorrichtung (DEC), mit folgenden Mitteln:
a) Bildkompressionseinheit (PC) zum Komprimieren des zumindest einen Bildbereichs (BR) in komprimierte Daten (KDAT) auf Basis einer ersten Vorschrift (V1);
b) Speichereinheit (SRB) zum Ablegen der komprimierten Daten (KDAT);
c) Bilddekompressionseinheit (PD) zum Dekomprimieren der komprimierten Daten (KDAT) in den zumindest einen Bildbereich (BR) auf Basis einer zweiten Vorschrift (V2);
d) wobei die erste Vorschrift (V1) auf Basis einer dritten Vorschrift (V3), wobei die dritte Vorschrift (V3) einen Kodiermodus (M1) der Bildencodiervorrichtung (ENC) definiert, gebildet ist,
e) wobei die zweite Vorschrift (V2) dadurch gebildet ist, dass die zweite Vorschrift (V2) eine zur dritten Vorschrift (V3) inverse dritte Vorschrift (V3I) ist, welche die Dekodierung eines mit der dritten Vorschrift (V3) kodierten Bildblocks definiert,
**dadurch gekennzeichnet, dass**
die erste Vorschrift (V1) auf Basis der dritten Vorschrift (V3) durch den folgenden Schritt erzeugt wird:
- Falls die dritte Vorschrift für den Bildblock einen INTER-Kodiermodus mit zugehörigen Bewegungsvektoren verwendet, dann wird die erste Vorschrift zum Komprimieren dieses Bildblocks im rekonstruierten Bild (RBD) in der Bildkompressionseinheit (PC) identisch zu der dritten Vorschrift gewählt, wobei ein Bewegungsvektor für den INTER-Kodiermodus sowohl der dritten Vorschrift als auch der ersten Vorschrift identisch gewählt wird.

6. Vorrichtung (SV) gemäß Anspruch 5,
die ferner eine Verarbeitungseinheit (VMIT) aufweist, die derart ausgestaltet ist, dass zumindest einer der Schritte gemäß einem der Ansprüche 2 bis 4 implementierbar und ausführbar ist.

7. Verwendung des Verfahrens gemäß einem der Ansprüche 1 bis 4 oder der Vorrichtung gemäß einem der Ansprüche 5 und 6 in einer Bildencodiereinheit (ENC) und/oder einer Bilddecodiereinheit (DEC).

## Claims

1. Method for storing at least one frame zone (BR) of a reconstructed frame (RBD), wherein a frame zone (BR) represents a frame block and the reconstructed frame (RBD) is generated by means of a frame encoding device (ENC) or by means of a frame decoding device (DEC), and for providing the at least one frame zone (BR) as a reference frame (REF) for the frame encoding device (ENC) or frame decoding device (DEC), the method comprising the following steps of:
a) compressing the at least one frame zone (BR) into compressed data (KDAT) on the basis of a first rule (V1);
b) storing the compressed data (KDAT);
c) decompressing the compressed data (KDAT) into the at least one frame zone (BR) on the basis of a second rule (V2);
d) wherein the first rule (V1) is formed on the basis of a third rule (V3), wherein the third rule (V3) defines a coding mode (M1) of the frame encoding device (ENC),
e) wherein the second rule (V2) is formed in that the second rule (V2) is chosen as an inverse third rule (V3I) to the third rule (V3), which defines the decoding of a frame block encoded with the third rule (V3),
**characterised in that**
the first rule (V1) is generated on the basis of the third rule (V3) by means of the following step:
- if the third rule for the frame block uses an inter coding mode with associated motion vectors, then the first rule for compressing said frame block in the reconstructed frame (RBD) in step a) is chosen identically to the third rule, wherein a motion vector for the inter coding mode is chosen identically to the third rule and to the first rule.

2. Method according to claim 1, wherein
the compressed data (KDAT) is stored together with an index (INX) in the reference frame buffer, wherein the index (INX) includes an identifier for uniquely identifying the first rule (V1) or the second rule (V2).

3. Method according to claim 1, wherein
the coded data (KDAT) is stored in accordance with a syntax for generating an output data stream which (i) is generated by means of the frame encoding device (ENC) and/or (ii) is received by means of the frame decoding device (DEC).

4. Method according to one of the preceding claims in combination with claim 2, wherein
at least one of the following parameters is signalled between frame encoding device (ENC) and frame decoding device (DEC) in order to synchronise the method in the frame encoding device (ENC) and in the frame decoding device (DEC):
- the index (INX) for the frame zone (BR) of the reconstructed frame (RBD) or for a frame region of the reconstructed frame (RBD) ;
- a quantisation factor which is used in an intra prediction mode or intra coding mode for compressing at least one of the frame zones.

5. Device (SV) for storing at least one frame zone (BR) of a reconstructed frame (RBD), wherein a frame zone (BR) represents a frame block and the reconstructed frame (RBD) has been generated by a frame encoding device (ENC) or by a frame decoding device (DEC), and for providing the at least one frame zone (BR) as a reference frame (REF) for the frame encoding device (ENC) or frame decoding device (DEC), the device comprising the following units:
a) frame compression unit (PC) for compressing the at least one frame zone (BR) into compressed data (KDAT) on the basis of a first rule (V1) ;
b) memory unit (SRB) for storing the compressed data (KDAT);
c) frame decompression unit (PD) for decompressing the compressed data (KDAT) into the at least one frame zone (BR) on the basis of a second rule (V2);
d) wherein the first rule (V1) is formed on the basis of a third rule (V3), wherein the third rule (V3) defines a coding mode (M1) of the frame encoding device (ENC);
e) wherein the second rule (V2) is formed in that the second rule (V2) is an inverse third rule (V3I) to the third rule (V3), which defines the decoding of a frame block encoded with the third rule (V3),
**characterised in that**
the first rule (V1) is generated on the basis of the third rule (V3) by means of the following step:
- if the third rule for the frame block uses an inter coding mode with associated motion vectors, then the first rule for compressing said frame block in the reconstructed frame (RBD) in the frame compression unit (PC) is chosen identically to the third rule, wherein a motion vector for the inter coding mode is chosen identically to the third rule and to the first rule.

6. Device (SV) according to claim 5
which additionally has a processing unit (VMIT) which is embodied in such a way that at least one of the steps according to one of claims 2 to 4 can be implemented and carried out.

7. Use of the method according to one of claims 1 to 4 or the device according to one of claims 5 and 6 in a frame encoding unit (ENC) and/or frame decoding unit (DEC).

## Revendications

1. Procédé de stockage d'au moins une zone d'image (BR) d'une image reconstruite (RBD), une zone d'image (BR) représentant un bloc d'image et l'image reconstruite (RBD) étant générée par un dispositif d'encodage d'image (ENC) ou par un dispositif de décodage d'image (DEC), et de fourniture de l'au moins une zone d'image (BR) en tant qu'image de référence (REF) pour le dispositif d'encodage d'image (ENC) ou le dispositif de décodage d'image (DEC), comportant les étapes suivantes :
a) compression de l'au moins une zone d'image (BR) pour obtenir des données comprimées (KDAT) sur la base d'une première règle (V1) ;
b) mise en mémoire des données comprimées (KDAT) ;
c) décompression des données comprimées (KDAT) pour obtenir l'au moins une zone d'image (BR) sur la base d'une deuxième règle (V2) ;
d) la première règle (V1) étant formée sur la base d'une troisième règle (V3), la troisième règle (V3) définissant un mode de codage (M1) du dispositif d'encodage d'image (ENC),
e) la deuxième règle (V2) étant formée par le fait que la deuxième règle (V2) est choisie en tant que troisième règle (V3I) inverse à la troisième règle (V3) et qui définit le décodage d'un bloc d'image codé au moyen de la troisième règle (V3),
**caractérisé en ce que**
la première règle (V1) est générée sur la base de la troisième règle (V3) par l'étape suivants :
- si la troisième règle utilise, pour le bloc d'image, un mode de codage INTER avec des vecteurs de mouvement associés, alors la première règle est choisie, pour la compression de ce bloc d'image dans l'image reconstruite (RBD) à l'étape a), identique à la troisième règle, un vecteur de mouvement étant choisi identique pour le mode de codage INTER non seulement de la troisième règle, mais aussi de la première règle.

2. Procédé selon la revendication 1, dans lequel les données comprimées (KDAT) sont déposées ensemble avec un indice (INX) dans la mémoire d'image de référence, l'indice (INX) comprenant un identifiant pour l'identification univoque de la première règle (V1) ou de la deuxième règle (V2).

3. Procédé selon la revendication 1, dans lequel les données codées (KDAT) sont mises en mémoire selon une syntaxe de génération d'un flux de données de sortie qui (i) est généré par le dispositif d'encodage d'image (ENC) et/ou (ii) reçu par le dispositif de décodage d'image (DEC).

4. Procédé selon l'une des revendications précédentes en combinaison avec la revendication 2, dans lequel est réalisée, pour la synchronisation du procédé dans le dispositif d'encodage d'image (ENC) et dans le dispositif de décodage d'image (DEC), une signalisation d'au moins l'un des paramètres suivants entre le dispositif d'encodage d'image (ENC) et le dispositif de décodage d'image (DEC) :
- l'indice (INX) pour la zone d'image (BR) de l'image reconstruite (RBD) ou pour une région d'image de l'image reconstruite (RBD) ;
- un facteur de quantification qui est utilisé dans le cas d'un mode de prédiction INTRA ou d'un mode de codage INTRA pour comprimer au moins l'une des zones d'image.

5. Dispositif (SV) de stockage d'au moins une zone d'image (BR) d'une image reconstruite (RBD), une zone d'image (BR) représentant un bloc d'image et l'image reconstruite (RBD) étant générée par un dispositif d'encodage d'image (ENC) ou par un dispositif de décodage d'image (DEC), et de fourniture de l'au moins une zone d'image (BR) en tant qu'image de référence (REF) pour le dispositif d'encodage d'image (ENC) ou le dispositif de décodage d'image (DEC), comportant les moyens suivants :
a) unité de compression d'image (PC) pour comprimer l'au moins une zone d'image (BR) pour obtenir des données comprimées (KDAT) sur la base d'une première règle (V1) ;
b) unité de mémoire (SRB) pour déposer les données comprimées (KDAT) ;
c) unité de décompression d'image (PD) pour décomprimer les données comprimées (KDAT) pour obtenir l'au moins une zone d'image (BR) sur la base d'une deuxième règle (V2) ;
d) la première règle (V1) étant formée sur la base d'une troisième règle (V3), la troisième règle (V3) définissant un mode de codage (M1) du dispositif d'encodage d'image (ENC),
e) la deuxième règle (V2) étant formée par le fait que la deuxième règle (V2) est une troisième règle (V3I) inverse à la troisième règle (V3) et qui définit le décodage d'un bloc d'image codé au moyen de la troisième règle (V3),
**caractérisé en ce que**
la première règle (V1) est générée sur la base de la troisième règle (V3) par l'étape suivante :
si la troisième règle utilise, pour le bloc d'image, un mode de codage INTER avec des vecteurs de mouvement associés, alors la première règle est choisie, pour la compression de ce bloc d'image dans l'image reconstruite (RBD) dans l'unité de compression d'image (PC), identique à la troisième règle, un vecteur de mouvement étant choisi identique pour le mode de codage INTER non seulement de la troisième règle, mais aussi de la première règle.

6. Dispositif (SV) selon la revendication 5, comportant en outre une unité de traitement (VMIT) qui est conçue de telle sorte qu'au moins l'une des étapes peut être implémentée et exécutée selon l'une des revendications 2 à 4.

7. Utilisation du procédé selon l'une des revendications 1 à 4 ou du dispositif selon l'une des revendications 5 et 6 dans une unité d'encodage d'image (ENC) et/ou une unité de décodage d'image (DEC).
